# EUROPEAN PATENT SPECIFICATION

(11) **EP 0 745 318 B1**
(45) Date of publication and mention of the grant of the patent: **18.09.2002**
(21) Application number: 96201252.2
(22) Date of filing: 10.05.1996
(51) Int. Cl.: A01F 15/07

(54) **A bale press**
Ballenpresse
Presse à balles

(30) Priority: 31.05.1995 NL 1000457
(43) Date of publication of application: 04.12.1996
(73) Proprietor: MAASLAND N.V., 3155 PD Maasland (NL)
(72) Inventor: van der Lely, Olaf, 6312 Steinhausen (CH); van der Lely, Alexander, 6340 Baar (CH)
(74) Representative: Corten, Maurice Jean F.M.

(56) References cited:
- WO-A-95/00324
- DE-A- 2 739 935
- FR-A- 2 398 448
- US-A- 3 534 537
- US-A- 4 334 467

## Description

The present invention relates to a bale press as described in the preamble of claim 1.

Such a bale press is known from document FR-A-2398448. In this construction the crop is entering the bale chamber horizontally from the front. Take-along elements pointing into the bale chamber together with several drivable chains in the cylindrical bale chamber are forcing the crop to circulate. Due to the circulation of the crop, the rotatable take-along elements are rotated as a result of which a bale is formed. When the bale is sufficiently pressed, the take-along elements are being pulled sidewards, the bale chamber is being opened at the back by moving the drivable chains apart, and an arm pushes the bale out of the chamber. However, by moving the take-along elements out of the bale, the side walls of the bale chamber remain their position. This latter has the disadvantage that when the elements are (slightly) bended, which could be possible in practise due to e.g. stones or pieces of wood which have unintentionally entered in the bale chamber, pulling back the elements is no longer possible or may cause damage of the side wall of the bale chamber.

It is the object of the invention to provide an alternative bale press. This is achieved with a bale press of the sort as defined above comprising the charaterising features of claim 1. A suchlike construction has the advantage that, when according to an other inventive feature there is attached a take-along element to a side wall, the take-along elements can be driven in a relatively simple manner. In addition, in case of blockage or breakdown, the bale chamber is relatively simply accessible. With the bale press according to the present invention, a construction of this type has the advantage that a bale can be removed from the bale chamber without meeting with resistance.

A bale press in which the take-along elements lengthwise stretch radially along a side wall is known per se from the German Offenlegungsschrift 27 39 935.

In a favourable embodiment, the take-along element is substantially elongated. e.g. may have the shape of a pin or a knife.

For a better understanding of the present invention and to show how the same may be carried into effect, reference will now be made, by way of example, to the accompanying drawings, in which:
Figure 1 shows, in side view, a bale press according to the invention, and
Figure 2 shows schematically a plan view of Figure 1.

In the drawings, corresponding parts have been indicated by the same reference numerals. Furthermore, the invention is by no means restricted to the embodiments shown and described here; they only serve to illustrate the inventive idea.

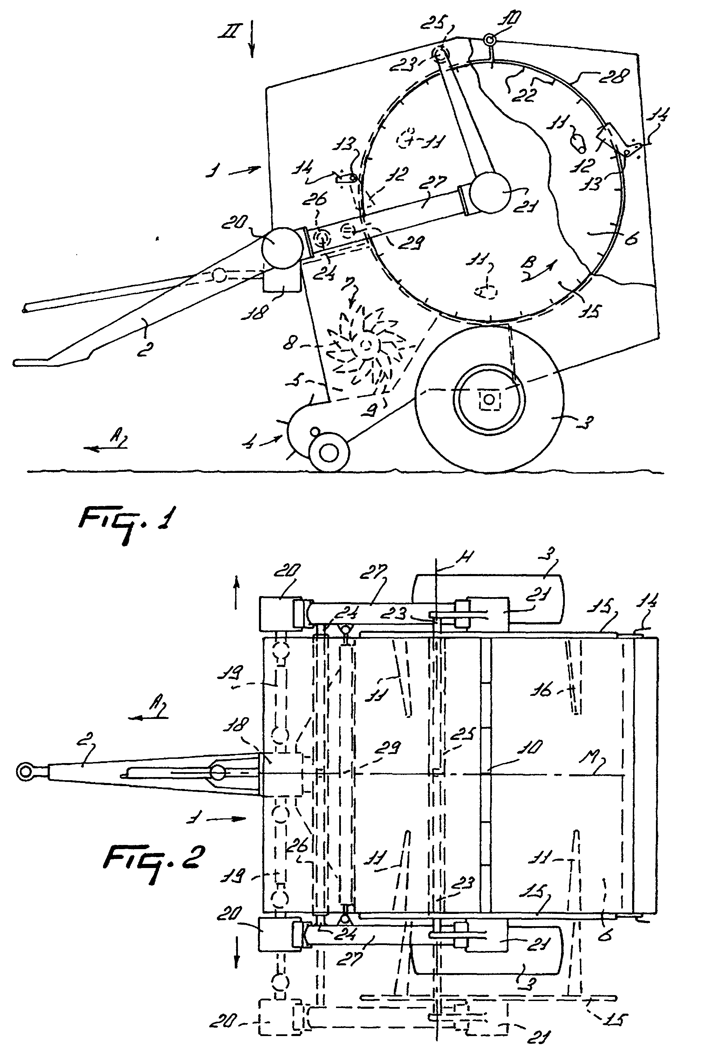

Figure 1 shows, in side view, a bale press 1 which, near its front side, is provided with a drawbeam 2 for its connection to a tractor and, near its rear side, with a pair of supporting wheels 3. For the purpose of picking up crop residues lying on the soil, such as hay or straw, the bale press comprises a pick-up member 4 located between the supporting wheels 3 and the drawbeam 2. The pick-up member leads, via a conveyor channel 5, to a bale chamber 6. Near its front side, the pick-up member 4 is supported to the ground via supporting members and, near its rear side, said pick-up member is connected, pivotably about a non-shown pivot shaft orientated horizontally and transversely to the direction of travel A, to the frame of the bale press. In the conveyor channel 5 there is arranged a beater member 7 including vanes 8. The vanes 8 give the crop an impulse in the direction of the bale chamber 6 and cooperate with knife elements 9. Said knife elements are arranged in the direction of conveying of the crop and extend upwardly from the bottom plate of the conveyor channel 5. Optionally, one or more vanes move with their ends between the knives 9. The cooperation results in a reduction of the length of the crop parts. The cylindrical bale chamber 6 is constituted by two portions, the rearmost one of which, via a pivot shaft 10 disposed in the upper part of the machine, is capable of pivoting away relative to the foremost one, for the purpose of discharging a bale formed therein.

The bale chamber 6 comprises drivable side walls 15, to which there are attached three take-along members constituted by pins 11, extending at least over a tenth of the width of the bale chamber 6. The pins 11 are tapering and are preferably disposed in a trailing position relative to their direction of movement B. The pins 11 are arranged, at a regular mutual distance, in an at least substantially concentric circle around the centre line. In an alternative embodiment of the take-along members, shown in Figure 2 in the left hand half of the machine, said members are constituted by knife-shaped elements 16, whose front side is also trailing, i.e. is situated at an angle relative to the centre line of the bale chamber 6. During operation of the machine, in the bale chamber 6 there is formed a bale due to the continuous movement in the direction of movement B of the take-along members 11, 16. For that purpose, the bale press 1 is provided with a driving device including a foremost central gear box 18 with a square transmission driven from the power take-off shaft of a tractor, and telescopic universal joint shafts 19 extending sidewardly therefrom, via which a gear box 20 connected with a wall construction for a wall 15 is driven. The gear box 20 also comprises a non-shown exit for the drive of the beater member 7. In an alternative embodiment, the universal joint shafts 19 are replaced by a fixed shaft supported in the vicinity of the gear box 20 and being in a driving connection therewith via coupling parts, that are telescopically movable from each other. From the gear box 20, the driving device extends along a wall 15 to a gear box 21, disposed centrally relative to a wall 15, from which gear box 21 the latter wall is driven.

Along the circumferential wall 28 of the bale chamber 6, there are arranged pressing elements 12, projecting to a greater or a lesser extent into the bale chamber. The pressing elements constitute a plane whose direction component extends at least substantially in radial direction and thus constitute a blocking means with reference to the possible unwinding of the bale in a direction opposite to the direction of rotation B. The pressing elements 12 are adjustable about a shaft 13, arranged in the longitudinal direction of the circumferential wall 28, and by means of a pin 14 that is adjustable in apertures provided in a wall of the machine. The pressing elements 12 also contribute to the density of the bale to be formed. The adjustability of the pressing elements 12 enables the machine to process different sorts of material, i.e. different crops. In the cylindrical circumferential wall 28, at a regular mutual distance, there are moreover provided profiles, e.g. constituted by ridges 22, for the purpose of increasing the friction between a bale and the circumferential wall 28, in order to arrive at a very high density of the bale.

For the purpose of discharging a bale that has been formed, a side wall 15 can hydraulically be moved outwards along the centre line H of the bale chamber, so that the bale can be discharged without hindrance by means of a take-along member 11, 16. To that end, the side wall 15 is included in a wall construction together with the supports 23 and 24 cooperating with straight guide means 25 and 26. In the present embodiment, the support 23 is attached to the gear box 21. The support 23 has a square shape and comprises a square portion, having a length of approximately half the width of the bale chamber, which portion is telescopically movably included in a straight guide means 25. The latter guide means is provided in the upper part of the machine in front of the pivot shaft 10 and extends substantially over the width of the bale chamber along the centre line H. A second support 24 is attached to a fixed connection 27, extending between the gear boxes 20 and 21, and is telescopically movable in a straight guide means 26, that is included in the machine along the front side of the bale chamber 6. In a (non-shown) alternative embodiment, the machine only comprises one support, corresponding to the support 23, which is fitted in a, seen in cross-section, preferably unround straight guide means disposed right above the gear box 21. For the purpose of moving a side wall 15 outwards, the machine comprises a hydraulic cylinder, disposed between the machine frame and a portion 27 of the side wall construction.

The invention is not restricted to the aforementioned description, but also relates to all the details of the drawings. Furthermore, the invention relates to all kinds of alternatives in the construction, of course, falling within the scope of the following claims.

## Claims

1. A bale press including an at least substantially cylindrical bale chamber including side walls (15) provided with elongated take-along elements (11, 16) from which elements at least one is extending lengthwise predominantly co-axially into the cylindrical bale chamber at some distance from the cylindrical circumferential wall (28), **characterized in that** the side walls are rotatable and drivable, **in that** the elongated take-along elements (11, 16) are attached to a respective side wall (15), and **in that** a side wall (15) is capable of being moved outwards along the centre line of the bale chamber (6).

2. A bale press as claimed in claim 1, **characterized in that** the side of a take-along element (11, 16) being, relative to the direction of movement (B) thereof, the foremost one, extends trailing in the direction of the longitudinal centre line (H) of the machine, relative to its direction of movement (B).

3. A bale press as claimed in claim 1 or 2, **characterized in that** the front side of the take-along element (11, 16) includes an angle relative to the centre line of the bale chamber.

4. A bale press as claimed in any one of the preceding claims, **characterized in that** a take-along element is constituted by a tapering pin (11).

5. A bale press as claimed in any one of the preceding claims, **characterized in that** a take-along element (16) is knife-shaped.

6. A bale press as claimed in any one of the preceding claims, **characterized in that** the machine, outside the bale chamber (6), comprises one or more straight guide means (25, 26), orientated transversely to the direction of travel (A), via which a side wall (15) is guided outwards.

7. A bale press as claimed in any one of the preceding claims, **characterized in that** a side wall (15) constitutes part of a side wall construction (23, 24, 27), supported by straight guide means (25, 26).

8. A bale press as claimed in any one of the preceding claims, **characterized in that** the bale press comprises' a driving device (18 - 21), part of which (20, 21) is included in the side wall construction (23, 24, 27).

9. A bale press as claimed in any one of the preceding claims, **characterized in that** in the bale chamber (6) pressing elements (12) extend from the cylindrical circumferential wall.

10. A bale press as claimed in claim 9, **characterized in that** a pressing element (12), seen in side view, extends with one side, from the cylindrical circumferential wall (28) of the bale chamber (6) and in the direction of movement (B) of the take-along elements (11, 16), in the bale chamber (6).

11. A bale press as claimed in claim 9 or 10, **characterized in that** the pressing element (12) is adjustable about a pivot shaft (13), extending parallel to the centre line (H) of the bale chamber (6).

12. A bale press as claimed in any one of claims 9 to 11, **characterized in that** the pressing elements (12) constitute blocking means.

13. A bale press as claimed in any one of the preceding claims, **characterized in that** the cylindrical circumferential wall (28) is provided with projections (22) disposed at a regular mutual distance.

14. A bale press as claimed in claim 13, **characterized in that** the projections (22) are constituted by ridges extending substantially in the longitudinal direction of the cylindrical circumferential wall.

## Patentansprüche

1. Ballenpresse mit einer zumindest im wesentlichen zylindrischen Ballenkammer, die Seitenwände (15) mit langgestreckten Mitnehmerelementen (11, 16) aufweist, wobei sich mindestens eines der Elemente in Längsrichtung überwiegend koaxial in einigem Abstand von der zylindrischen Umfangswand (28) in die zylindrische Ballenkammer hineinerstreckt,
**dadurch gekennzeichnet, daß** die Seitenwände drehbar und antreibbar sind, daß die langgestreckten Mitnehmerelemente (11, 16) an einer entsprechenden Seitenwand (15) angebracht sind, und daß eine Seitenwand (15) entlang der Mittellinie der Ballenkammer (6) nach außen bewegbar ist.

2. Ballenpresse nach Anspruch 1,
**dadurch gekennzeichnet, daß** die Seite eines Mitnehmerelementes (11, 16), die in bezug auf seine Bewegungsrichtung (B) die vordere ist, sich relativ zu seiner Bewegungsrichtung (B) nach hinten in Richtung der Längsmittellinie (H) der Maschine erstreckt.

3. Ballenpresse nach Anspruch 1 oder 2,
**dadurch gekennzeichnet, daß** die Vorderseite des Mitnehmerelementes (11, 16) mit der Mittellinie der Ballenkammer einen Winkel bildet.

4. Ballenpresse nach einem der vorhergehenden Ansprüche,
**dadurch gekennzeichnet, daß** ein Mitnehmerelement durch einen Kegelstift (11) gebildet ist.

5. Ballenpresse nach einem der vorhergehenden Ansprüche,
**dadurch gekennzeichnet, daß** ein Mitnehmerelement (16) messerförmig ausgebildet ist.

6. Ballenpresse nach einem der vorhergehenden Ansprüche,
**dadurch gekennzeichnet, daß** die Maschine außerhalb der Ballenkammer (6) eine oder mehrere gerade Führungsvorrichtungen (25, 26) aufweist, die quer zur Fahrtrichtung (A) ausgerichtet sind, über die eine Seitenwand (15) nach außen geführt wird.

7. Ballenpresse nach einem der vorhergehenden Ansprüche,
**dadurch gekennzeichnet, daß** eine Seitenwand (15) Teil einer Seitenwandkonstruktion (23, 24, 27) ist, die von der geraden Führungsvorrichtung (25, 26) abgestützt wird.

8. Ballenpresse nach einem der vorhergehenden Ansprüche,
**dadurch gekennzeichnet, daß** die Ballenpresse eine Antriebsvorrichtung (18 bis 21) umfaßt, von der ein Teil (20, 21) in der Seitenwandkonstruktion (23, 24, 27) angeordnet ist.

9. Ballenpresse nach einem der vorhergehenden Ansprüche,
**dadurch gekennzeichnet, daß** Preßelemente (12) sich von der zylindrischen Umfangswand in die Ballenkammer (6) erstrecken.

10. Ballenpresse nach Anspruch 9,
**dadurch gekennzeichnet, daß** sich ein Preßelement (12) in Seitenansicht mit einer Seite von der zylindrischen Umfangswand (28) der Ballenkammer (6) und in Bewegungsrichtung (B) der Mitnehmerelemente (11, 16) in die Ballenkammer (6) hineinerstreckt.

11. Ballenpresse nach Anspruch 9 oder 10,
**dadurch gekennzeichnet, daß** das Preßelement (12) um eine Schwenkachse (13) verstellbar ist, die sich parallel zur Mittellinie (H) der Ballenkammer (6) erstreckt.

12. Ballenpresse nach einem der Ansprüche 9 bis 11,
**dadurch gekennzeichnet, daß** die Preßelemente (12) Blockiervorrichtungen bilden.

13. Ballenpresse nach einem der vorhergehenden Ansprüche,
**dadurch gekennzeichnet, daß** die zylindrische Umfangswand (28) mit Vorsprüngen (22) versehen ist, die mit regelmäßigem Abstand zueinander angeordnet sind.

14. Ballenpresse nach Anspruch 13,
**dadurch gekennzeichnet, daß** die Vorsprünge (22) durch Rippen gebildet sind, die sich im wesentlichen in Längsrichtung der zylindrischen Umfangswand erstrecken.

## Revendications

1. Presse à balles comprenant une chambre de compression au moins sensiblement cylindrique comprenant des parois latérales (15) munies d'éléments d'accompagnement allongés (11, 16) éléments parmi lesquels au moins un s'étend dans le sens de la longueur de manière principalement coaxiale jusque dans la chambre de compression cylindrique à une certaine distance de la paroi circonférentielle cylindrique (28), **caractérisée en ce que** les parois latérales sont rotatives et peuvent être entraînées, **en ce que** les éléments d'accompagnement allongés (11, 16) sont attachés à une paroi latérale respective (15), et **en ce qu'**une paroi latérale (15) peut être déplacée vers l'extérieur le long de la ligne centrale de la chambre de compression (6).

2. Presse à balles selon la revendication 1, **caractérisée en ce que** le côté d'un élément d'accompagnement (11, 16) est, par rapport au sens de déplacement (B) de celui-ci, l'élément d'accompagnement situé le plus en avant, et s'étend vers l'arrière dans la direction de la ligne centrale longitudinale (H) de la machine, par rapport à son sens de déplacement (B).

3. Presse à balles selon la revendication 1 ou 2, **caractérisée en ce que** le côté avant de l'élément d'accompagnement (11, 16) comprend un angle par rapport à la ligne centrale de la chambre de compression.

4. Presse à balles selon l'une quelconque des revendications précédentes, **caractérisée en ce qu'**un élément d'accompagnement se compose d'une broche conique (11).

5. Presse à balles selon l'une quelconque des revendications précédentes, **caractérisée en ce qu'**un élément d'accompagnement (16) est en forme de couteau.

6. Presse à balles selon l'une quelconque des revendications précédentes, **caractérisée en ce que** la machine, à l'extérieur de la chambre de compression (6), comprend un moyen de guidage rectiligne ou plus (25, 26) orienté de manière transversale par rapport au sens de déplacement (A), par l'intermédiaire duquel une paroi latérale (15) est guidée vers l'extérieur.

7. Presse à balles selon l'une quelconque des revendications précédentes, **caractérisée en ce qu'**une paroi latérale (15) fait partie d'une structure formant paroi latérale (23, 24, 27) supportée par des moyens de guidage rectilignes (25, 26).

8. Presse à balles selon l'une quelconque des revendications précédentes, **caractérisée en ce que** la presse à balles comprend un dispositif d'entraînement (18 à 21) dont une partie (20, 21) est comprise dans la structure formant paroi latérale (23, 24, 27).

9. Presse à balles selon l'une quelconque des revendications précédentes, **caractérisée en ce que**, dans la chambre de compression (6), des éléments de compression (12) s'étendent depuis la paroi circonférentielle cylindrique.

10. Presse à balles selon la revendication 9, **caractérisée en ce qu'**un élément de compression (12), vu selon une vue latérale, s'étend avec un côté depuis la paroi circonférentielle cylindrique (28) de la chambre de compression (6) et dans le sens de déplacement (B) des élément d'accompagnement (11, 16) dans la chambre de compression (6).

11. Presse à balles selon la revendication 9 ou 10, **caractérisée en ce que** l'élément de compression (12) peut être ajusté autour d'un boulon d'articulation (13) s'étendant de manière parallèle à la ligne centrale (H) de la chambre de compression (6).

12. Presse à balles selon l'une quelconque des revendications 9 à 11, **caractérisée en ce que** les éléments de compression (12) constituent des moyens de blocage.

13. Presse à balles selon l'une quelconque des revendications précédentes, **caractérisée en ce que** la paroi circonférentielle cylindrique (28) est munie de saillies (22) séparées d'une distance régulière les unes des autres.

14. Presse à balles selon la revendication 13, **caractérisée en ce que** les saillies (22) se composent d'arêtes qui s'étendent sensiblement dans la direction longitudinale de la paroi circonférentielle cylindrique.
